Europäisches Patentamt

European Patent Office

Office européen des brevets

(11) Publication number: **0 059 093**
**B1**

(12) **EUROPEAN PATENT SPECIFICATION**

(45) Date of publication of patent specification: **16.05.84**

(21) Application number: **82300886.7**

(22) Date of filing: **22.02.82**

(51) Int. Cl.³: **B 21 B 37/10**

(54) **Heat shields.**

(30) Priority: **23.02.81 GB 8105674**

(43) Date of publication of application:
**01.09.82 Bulletin 82/35**

(45) Publication of the grant of the patent:
**16.05.84 Bulletin 84/20**

(84) Designated Contracting States:
**BE DE FR GB IT NL**

(56) References cited:
**EP-A-0 010 976**
**DE-A-1 452 102**
**US-A-3 606 778**

(73) Proprietor: **ENCOMECH PRODUCT
DEVELOPMENT LIMITED**
**19 Tudor Avenue**
**Worcester Park Surrey (GB)**

(72) Inventor: **Laws, William Robert**
**19 Tudor Avenue Worcester Parks
Surrey (GB)**
Inventor: **Reed, Geoffrey Ronald**
**8 Beechdene Tadworth
Surrey (GB)**

(74) Representative: **Gura, Henry Alan et al
MEWBURN ELLIS & CO. 2/3 Cursitor Street
London EC4A 1BQ (GB)**

Courier Press, Leamington Spa, England.

## Description

This invention relates to panels for heat shielding and/or conserving arrangements, of a form comprising a core of material that provides a heat-insulating layer within a protective outer casing.

Such panels have been found useful for reducing heat losses from metal products undergoing hot rolling, both in bar and strip rolling mills. The hot face of the casing of each panel, i.e. that face that is exposed to the hot-rolled material, is in the form of a thin wall or membrane of a high temperature alloy that quickly heats up to the temperature of the product being processed because of its low thermal mass.

In order to reduce costs, the individual panels of an installation should be made as large as possible, but the extended use of such panels in severe conditions, in particular when large thermal gradients are experienced, can result in problems. In steel rolling mills, for instance, these gradients may occur as a hot billet or slab is introduced, or because only part of the transverse extent of the panels is covered when rolling narrower strip. For example, in large panels (e.g. exceeding 400 mm by 400 mm in plan area) the expansion of the thin wall or membrane forming the hot face of the panel is so great that gross buckling can occur, and the membrane may be cracked by the repeated stresses as the panels are subjected to successive thermal cycles from about 300°C to 1050°C with the movement of each hot slab past them. Typically, in one year the panel can be subjected to over 150,000 thermal cycles and it is found that the known form of membrane employed as a hot face may fail after as few as 10,000 thermal cycles.

The bottom panels, i.e. the panels shielding the underside of the material path through the rolling mill, may be subject to an additional difficulty due to the build up of foreign matter on them. When steel products are reheated, e.g. to temperatures up to 1250°C, scaling of the slabs or billets will occur (i.e. oxidation of the surface to form loosely attaching scale). For many products, scaling is acceptable and is even desirable because it removes minor surface defects and results in a better finished product, but there is a problem in disposing of the scale if heat shielding panels are arranged below the material path. Typically, furnace oxidation can result in the formation of scale to the extent of some $1\frac{1}{2}\%$ of the product itself and most of this scale will fall from the product during rolling.

It has been found that the deposition of scale at this rate on the bottom panels can quickly result in a build-up or deposit which effectively acts as a thicker wall than the casing membrane forming the hot face of the panel. This effect is undesirable because it alters the thermal characteristics and physical properties of the panels, which will have been designed to suit each particular installation. It is desirable therefore to avoid any significant accumulation of scale on the panel. A measure of the problem is that in a mill rolling about 400 tonnes of steel per hour, up to 2 tonnes of scale per hour can be deposited on the bottom panels of a 60 metre long installation of panels.

According to one aspect of the present invention, there is provided a composite thermal insulation panel comprising a core of heat-insulating material enclosed in an outer casing comprising a thin wall providing a membrane adapted to be exposed to thermal radiation from adjacent high temperature material and to form a hot face of the panel with a temperature close to that of said material, said membrane having edges retained between opposed elements of the panel casing at the sides thereof, said elements being arranged at a spacing substantially larger than the thickness of the membrane and the membrane edges being held so as to be able to move inwardly and outwardly substantially freely relative to said elements while remaining engaged therebetween.

In this manner, the membrane can be held to occupy a generally predetermined position transversely without having to rely upon the mechanical or dimensional stability of the heat-insulating material. The membrane is nevertheless able to move to accommodate thermal expansion even though it may be substantially deformed in prolonged use because of internal stresses set up by effects of temperature gradients and other non-uniform influences.

As another manner of limiting stresses arising from the considerable thermal expansion of the hot face of a composite thermal insulation panel, according to another aspect of the invention in the casing of such a panel, in which the hot face is formed by a thin wall providing a membrane that attains a temperature close to that of adjacent high temperature material upon exposure to thermal radiation from that material, said membrane comprises surfaces that are inclined from at least two opposite edges to an inner region which is thereby at a different level from said edges.

By so inclining the surfaces of the membrane, it is able to flex relatively freely as it expands with respect to the adjacent parts of the casing, and thermal expansion cycles of the hot face can be accommodated without the bending stresses producing buckling that could weaken the panel or lead to a permanent distortion that alters its characteristics.

Preferably, in the case of panels arranged to be mounted above or below the material being processed, said surfaces of the hot face are inclined downwardly to the inner region of the panels when so mounted.

The arrangement of such inclined surfaces in the membrane may be provided in conjunction with the arrangement of the membrane edges to be movable substantially freely, as aforesaid, relative to retaining elements at the sides of the panel casing. However, in order to allow panels to be mounted as close as possible to the high temperature source while avoiding direct contact between them and the source, their hot faces are preferably so arranged and supported that thermal expansion results in deformation laterally of the panel rather than transversely to its extent.

According to a further aspect of the invention, there is provided a composite thermal insulation panel or a group of panels disposed side by side, the or each said panel having a core of heat-insulating material enclosed in an outer casing comprising a thin wall providing a membrane adapted to be exposed to thermal radiation from adjacent high temperature material and to form a hot face of the panel with a temperature close to that of said material, said membrane of the panel or said membranes of the group of panels comprising surfaces that are inclined downwardly to at least one through opening within the overall planar extent of the panel or group of panels.

In this arrangement, the inclined hot face surfaces may be adapted to facilitate relative movements of the hot face membrane as already described. Whether or not this is required, however, the arrangement offers other advantages.

Said through opening may provide a sight path for temperature sensing means and/or, in the case of a panel or panels below the high temperature source, a passage for the removal of scale. Thus in the lower panel or panels below a hot steel slab or strip, with appropriate inclination of the hot faces a deposit of scale or other foreign matter will be able to slide under its own weight through said opening so that it is not allowed to build up on the panel hot face. Such lower panels may be flexibly mounted to facilitate scale removal through said opening, they then being vibrated either by the normal roller table vibrations or by a separate vibrating motor arrangement.

Preferably, in a panel according to the invention the heat-insulating core, at least in the region immediately underlying said hot face membrane, comprises a pre-compressed ceramic fibre blanket to act resiliently as a spring to ensure contact with the hot membrane as it expands and contracts through its duty cycle.

The invention will be described in more detail with reference to a number of exemplary embodiments shown in the accompanying schematic drawings, in which:—

Fig. 1 illustrates a panel according to the invention having a convex hot face,

Figs. 2a and 2b are schematic illustrations of the thermal deformation of the panel in operation,

Fig. 3 illustrates a panel according to the invention having a concave hot face,

Figs. 4a, 4b are schematic illustrations of the deformation of the panel of Fig. 3 in operation,

Figs. 5 and 6 are isometric and sectional views of a preferred form of mounting for the hot face membrane of a panel according to the invention,

Fig. 6a is an enlarged illustration of a membrane edge joint shown in Fig. 6,

Figs. 7 and 8 are isometric and sectional views of another form of panel according to the invention,

Fig. 9 is a schematic detail view of an alternative membrane edge joint,

Figs. 10 and 11 are mutually transverse sectional views showing further details of another form of panel according to the invention,

Fig. 12 illustrates a pair of bottom panels according to another embodiment of the invention,

Fig. 13 is a longitudinal section in a central vertical plane of one of the panels in Fig. 12,

Fig. 14 is a further longitudinal vertical section illustrating some modifications of the panels described with respect to Figs. 12 and 13, and

Fig. 15 illustrates a group of bottom panels according to a further embodiment of the invention.

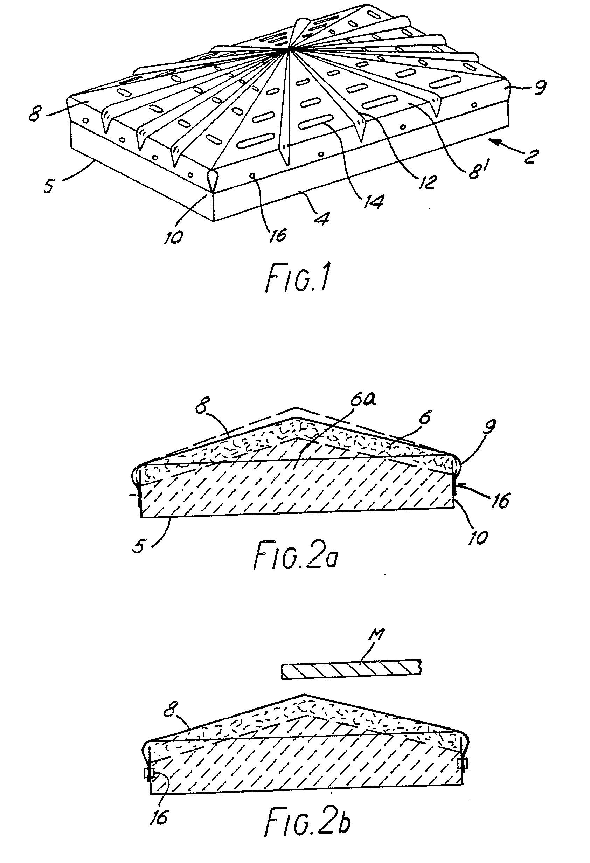

Figs. 1 and 2a and b show, for use in a slab hot rolling mill, a heat insulating panel 2 comprising a thin-walled casing 4 enclosing a ceramic fibre core 6 (only partly shown in Figs. 2a and b). The casing comprises a base part 5 and a hot face formed by a thin wall or membrane 8 with extended side walls 9 fixed by fasteners 16 to side walls 10 of the base part 5 in the region towards the base or exterior of the casing which remains relatively cool in operation because the side walls are shielded from the hot slabs by adjacent similar panels. The hot face membrane is exposed directly to the heat of the metal slab being processed in the mill and is convex with its surfaces sloping to a central region where the height of the face is greatest (the terms convex and concave in the context of the present invention including a form made up of flat portions 8' such as the pyramidal-like form of the hot face illustrated in Fig. 1). As the membrane is heated by the passage of hot material over it, it expands to the position shown in broken lines and deforms in the manner illustrated in Fig. 2a, i.e. by increasing its convexity and bowing the side walls about the fixing points of the fasteners 16. Because of its thin-walled convex form, only relatively small internal stresses are generated by the deformation and local buckling can be minimised.

In this and all the following examples to be described herein, the internal ceramic fibre core 6, or at least a layer of that core adjacent the hot face membrane 8, is in the form of a pre-compressed blanket and with the expansion of the membrane 8 as illustrated in Fig. 2a it also expands resiliently to maintain contact with the membrane and so maintain the thermal insulating characteristics of the panel. Where the precompressed blanket provides only a layer of the ceramic fibre core immediately adjoining the hot face membrane, it is preferably backed by pre-formed blocks 6a of ceramic fibre or lightweight refractory.

To further minimise internal stresses within the hot face membrane 8 from thermal expansion, Fig. 1 shows the provision of corrugations in that membrane. These comprise a series of radial corrugations 12 extending from the central peak of the membrane into the top portion of the margin of an adjoining side face but ending short of the fasteners 16 so that a "hinging" action can be obtained, and a secondary series of smaller corrugations 14 extending parallel to respective side faces between adjacent main corrugations. These corrugations are particularly useful with larger area panels, in order to allow for differential thermal expansion that may occur within the area of an individual panels.

For example, as illustrated in Fig. 2b the hot material M being processed may be arrested in a position in which it covers only part of the area of a panel (or the panel may extend laterally beyond the width of the material) and the characteristic rapid heating will be experienced only by a part of the hot face membrane. The corrugations can then greatly reduce the internal thermal stresses produced by the resulting differential expansion of different portions of the membrane.

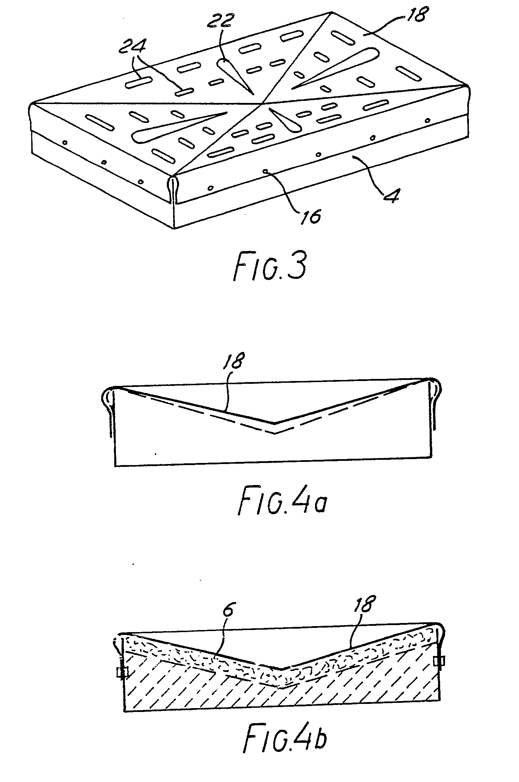

Fig. 3 illustrates an arrangement similar to that in Fig. 1 but one in which the hot face is formed by a concave membrane 18 that slopes downwardly from the side edges of the panel to a lower central region. The ceramic fibre core 6 is similarly resiliently packed into the panel casing and is compressed by the increasing concavity of the hot face membrane (indicated in broken lines in Fig. 4a) when that face is heated. The membrane 18 is also shown with main and auxiliary corrugations 22, 24, analogously to the example in Fig. 1. In this arrangement, however, the main corrugations 22 are at right angles to their respective adjacent edges of the hot face membrane, and they do not extend into the side walls. This arrangement is more suited for panels which are markedly oblong, whereas the arrangement in Fig. 1 is more suited to panels that are plate-like in plan view.

Either of the two examples of panels described above may be deployed above the material being processed, and the corrugations may then be either convex or concave. If deployed below the material being processed, there should be sufficient space between adjacent panels of the form shown in Fig. 1 to allow scale to escape, and preferably only convex configurations should be used because concave corrugations could trap scale or other foreign matter and so impair the performance of the panel.

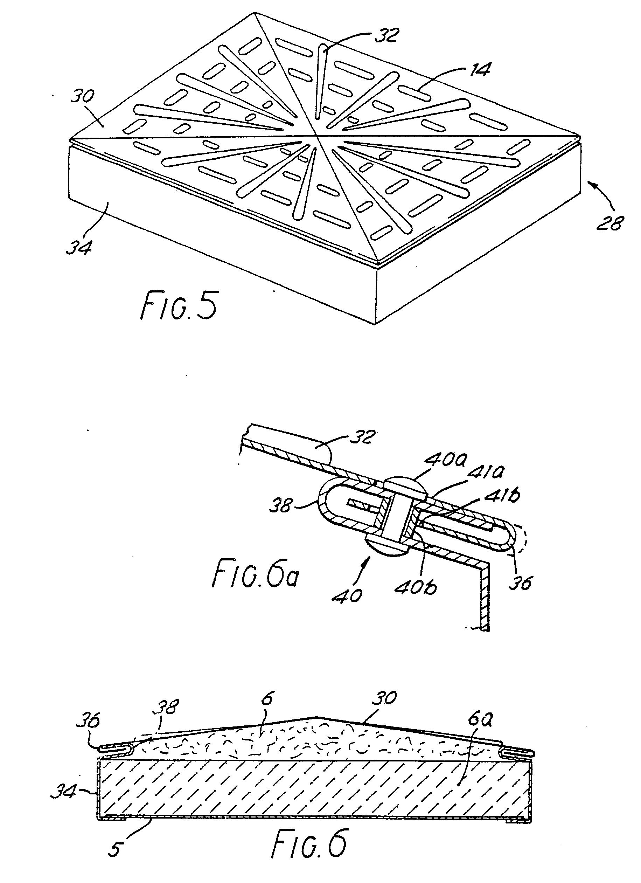

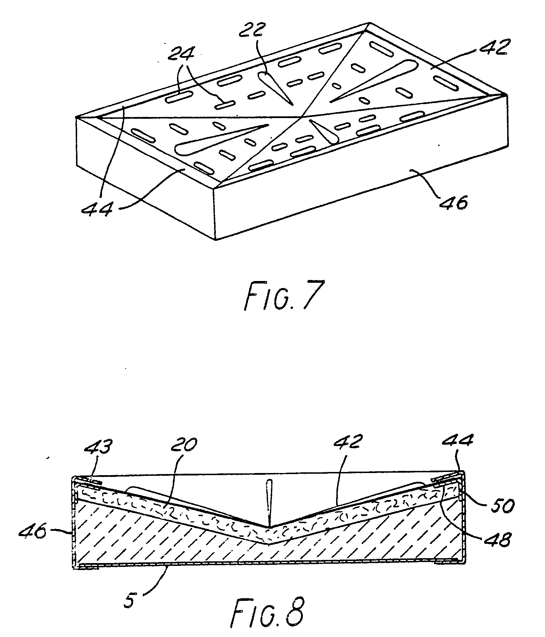

In certain cases, as when the panels are placed very close to the path of the hot material to optimise their thermal effectiveness, vertical deformations as indicated in Fig. 2a must be limited to avoid the risk of the material striking the membrane. It is, however, possible to so form and support the membrane that thermal expansion results in mainly lateral deformations and Figs. 5, 6 and 6a illustrates a panel 28 in which this is done, the panel being otherwise similar to the preceding examples.

In this construction, a convex hot face membrane 30 is formed separately from the thicker side walls of the panel and the radial corrugations 32 terminate short of the sides of the panel. The membrane is fixed to the panel side walls 34 along its edges, each edge being folded along its length to form a U-section lip 36 having both limbs of the U-section substantially parallel to the adjacent region of the panel. The adjoining side walls each have a similarly folded edge forming an oppositely directed U-section lip 38 so that the two U-section lips 36, 38 interlock.

The interlocking engagement allows sliding between the lips parallel to the limbs of the U-sections; the membrane 30 is therefore able to expand laterally and is not constrained to increase its convexity as it is heated. The spacing of the parallel limbs of the U-section lips is substantially greater than the thickness of that limb of the other lip held between them. Between the limbs of the casing side edge lip 38, a spacing of about 4 to 5 mm may be provided to receive the limb of a hot face membrane of 1.0 mm thickness. In this way, even though the thin membrane may distort during prolonged use with repeated heating and cooling cycles, the receiving space for the outer limb of its lip 36 remains sufficient to allow the edge of the membrane still to slide relatively freely in the lip 38. Pins or rivets 40 may be provided at intervals along the length of each side wall edge, if required to prevent the U-section limbs of the respective lips spreading apart during extended use. The head 40a and a bushed shank 40b of each pin are located in elongate slots 41a, 41b in the limbs of the U-section membrane lips 36 so as not to restrict the expansion of the membrane, but they do ensure that the lips 36, 38 will not slide out of engagement with each other.

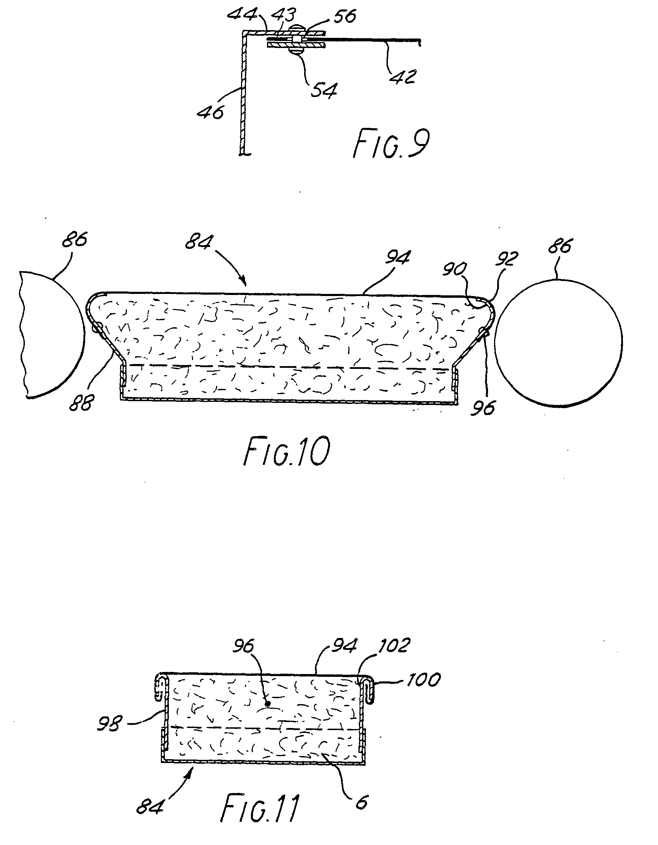

Analogously to the convex membrane panel in this last-described example, Figs. 7 and 8 show a concave membrane panel in which the membrane 42 is retained behind flanges 44 of side walls 46 of the panel so as to be free to expand laterally when heated. In this example, the membrane edges 43 are not folded over but are retained in the channel provided by the upper folded-in flange 44 on each side wall and a lower flange 48 of a supplementary angle section 50 secured to the interior of each side wall. As in the preceding example, the spacing between the flanges 44, 48 is substantially greater than the thickness of the membrane 42, and pins can be inserted through the flanges and the interlocked edges of the membrane, like the pins 40 shown in Fig. 6a to ensure that the parts of the joints are maintained in their correct working relationship. It will be understood that a concave panel can alternatively have the interlocking U-section joints of the preceding example, and indeed that a convex membrane can be held behind flanged side walls in the manner shown in Figs. 7 and 8.

Fig. 9 illustrates an alternative way of attaching the hot face membrane 42 to flanged side walls 46 of a panel in which rivets 54 or the like hold the membrane between the flange 44 and a free backing member, the apertures 56 in the membrane edge 43 for the rivets being elongated to allow thermal expansion movements.

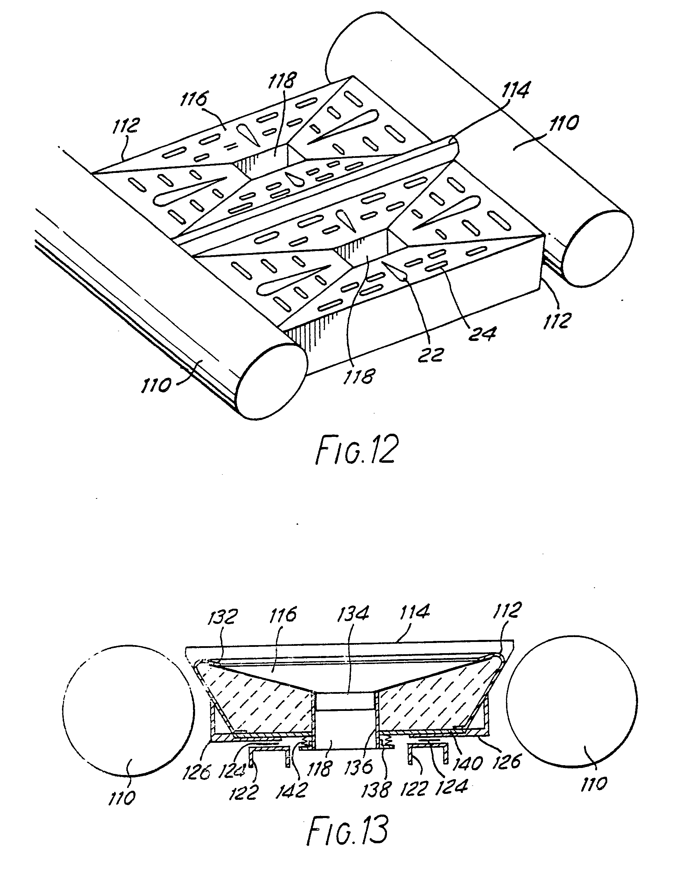

Another alternative way of securing the hot face membrane in a panel according to the invention is illustrated in Figs. 10 and 11 for a panel that is to be disposed below the material being processed. This shows a panel 84 between two adjacent rolls 86 of a roller table and side walls 88 at the front and rear of the panel have curved top edges 90 that are lapped by the side margins 92 of the hot face membrane 94. Near their bottom edges these side margins are secured to the side walls, e.g. by riveting or welding, the securing means 96 being confined to the centre of the panel. The curved regions of the overlapping side walls and membrane side edges can allow some resiliently flexible deformation transverse to the roll axes.

Along the side walls 98 running transverse to the roll axes, the joints between the side walls and the top membrane are formed by interlocking U-section lips 100, 102 of the membrane and side walls respectively. The limbs of the lips are directed transversely to the plane of the hot face membrane but in normal use there is free space between adjacent limbs, even greater than the nominal spacing provided in the examples of Figs. 6 and 8, whereby relative thermal expansion movements are not hindered by these joints. Since the membrane is positively located relative to the side walls by the rivets or welds 96 on the fore and aft centreline of the panel, and by curved top edges 90, 92, these interlocking U-section lips need not have any supporting function and can act simply to prevent foreign matter such as scale and water (for example from mill descaling equipment) entering the panels and damaging the refractory linings.

It is to be understood that although the preceding examples show panels with convex or concave hot face membranes having edges located in engagements provided by the adjacent sides of the panel casings that allow said edges to move substantially freely laterally of said engagements, it is also possible to provide such engagements for planar hot face membranes to similarly permit relative thermal expansion to occur.

In these examples in which the edges of the membrane are retained by casing elements so that they are permitted a limited movement, at most, both inwardly and outwardly relative to the plane of the hot face, the ceramic fibre core is preferably precompressed, as described above, and so generally bears against the membrane urging it outwards. However because the membrane also has its inwards movements limited by said casing elements, independently of the ceramic fibre packing, any deformations that may occur during use, or local shifts in the position of the ceramic fibre will have little deleterious effect on the functioning of the hot face membrane and the useful life of the panel is therefore prolonged.

With some modification, a panel having a concave hot face membrane can be particularly suitable for a bottom panel to be disposed below the material being processed and Figs. 12 and 13 show one example of panels adapted to that purpose. Between successive rollers 110 on a flat product roller transfer table there are two bottom panels 112 arranged side by side and separated by the central transfer bar 114 which prevents the material being processed from striking and damaging the panels. The hot face membrane 116 of each panel is concave, with its surfaces sloping towards a central discharge opening 118 that extends through the panel. Preferably the discharge opening is of rectangular section and has a minimum width of not less than 30 mm. Scale falling on the panels is therefore able to slide down the top face membrane and be discharged continuously through the opening so that only a minimal deposit will be present at any time. The top face membrane is provided with convex corrugations or ribs 22, 24 as shown in Fig. 7. The panels are mounted on fixed supports 122 through springs 124 and brackets 126 so that they will be vibrated continually by surrounding disturbances, in particular by the movement of the hot material along the mill roller table, this assisting the movement of the scale to the discharge opening.

The concave form of the hot face membrane is particularly suitable for the bottom panels because as is shown in Fig. 13 it allows the panels to extend, in their regions adjacent the table rollers 110, close to the upper limits of the rollers and so shield the rollers as much as possible from the heat of the material being processed.

While it is possible to locate the hot face membrane so that its edges can move relative to the adjoining sides of the panel casing, in the manner already described above, Fig. 13 illustrates instead a means for applying tension to the concave membrane 116 in order to assist it to retain its shape as it undergoes repeated thermal cycles. The outer periphery of the membrane is fixed to folded-over lips 132 of the side walls, and at the central opening it has a folded over lip 134 that is fixed, as by bolts, rivets or welds, to a thicker section chute 136 which has a bottom flange 138 spaced below the bottom wall 140 of the panel. Compression springs 142 between the bottom flange and the bottom wall, or similar tensioning means, apply a downwards force to the chute that is in turn transmitted to the top face membrane.

The hot face membrane has a slope that is preferably at least 18° to the horizontal to ensure the movement of the scale to the chute. Larger angles can be used, but because a minimum thickness of panel is necessary to obtain the required heat-shielding properties, too great a slope will increase the overall depth of the panel excessively. In practical terms, when the panels are to be retrofitted to existing rolling mill roller tables, the limited space available may make it impossible to have an angle greater than 32° if each panel has only a central scale chute.

It is possible to increase the slope angle without unduly increasing the overall depth if the panel has a number of spaced scale chutes over its area, but this complicates the construction and also reduces the effective heat shield surface area. Nevertheless if it is required to have relatively large panels and the operating conditions are not unduly severe it may be preferred to employ an arrangement with two or more scale chutes within the area of an individual panel.

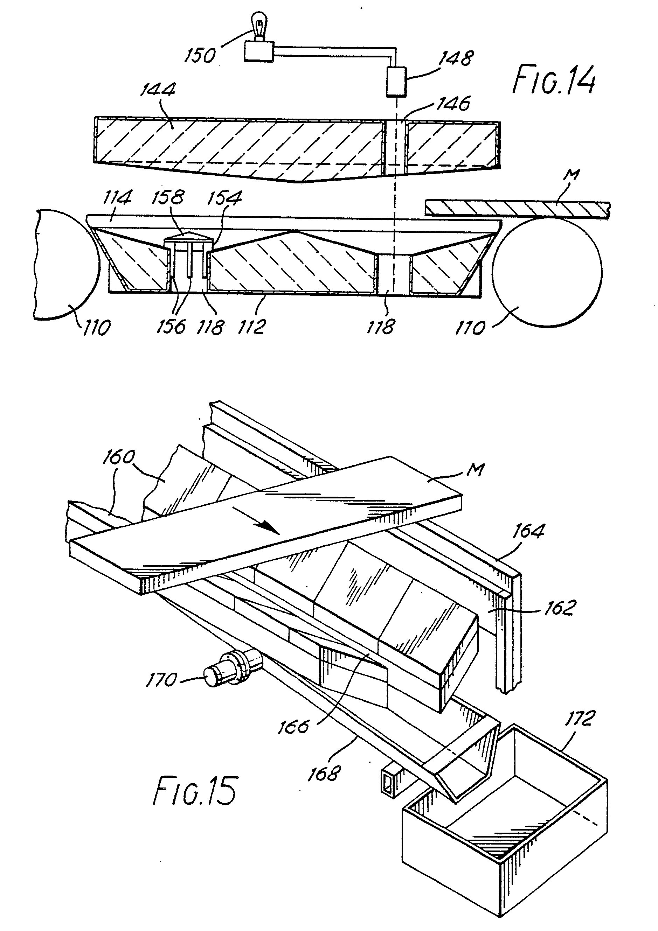

The openings 118 may serve a further function, as will now be described with reference to Fig. 14. The discarded scale falling through the chute will fall into a water flume or channel (not shown) conventionally provided in a slab rolling mill and be carried away by the flow of water there. If in the adjacent upper panel 144 there is an aperture 146 aligned with the opening, it is possible to mount a hot metal detector 148 above the upper panel having a line of sight into the water flume. The detector will then sense the arrival of a hot slab below it as the slab obscures the line of sight into the cold flume. The operation of the detector may thus be used to actuate indicating means, e.g. the indicating lamp 150, to signal the arrival of the slab M.

By arranging a series of detectors along the material path, up to a maximum dictated by the number of scale chutes, and connecting them each to an individual indicating means with repeater signals elsewhere if required, it is possible to provide a continuous indication of the slab position, e.g. as an analogous display of indicating lamps. This may be particularly desirable in a tunnel installation in which the slab is totally enclosed by the arrangement of heat-shielding panels and its progress cannot therefore be observed directly.

If a scale chute is not utilised for indicating means as described above, it is possible to reduce the heat loss through it by the use of a shielding cowl 154 having stepped lugs 156 that fit slidably within the chute to support top hood 158 of the cowl at a position spaced above the adjacent hot face surfaces so as not to obstruct the passage of scale into the chute. The hood of the cowl can, like the panel, be a thin-walled construction with internal ceramic fibre insulation.

The scale disposal arrangements have been described in the preceding embodiments with particular reference to their application to hot strip mill applications, where water flumes or channels exist to carry scale away to recovery points. Panels according to the invention can also be used for retaining heat in bars and slabs in other processes, for example during heat treatment or annealing operations, and alternative panel arrangements and scale removal means may then be preferred.

Fig. 15 shows an arangement for an annealing furnace in which the hot slab or bar M is traversed in the direction of the arrow shown through an installation of upper and lower panels having the membrane-covered insulated core construction already described, (only the lower panels 160 being illustrated in outline) by a known form of moving beam mechanism comprising a series of fixed beams 162 and displaceable carrier beams 164 (only one of each of which is illustrated) at spaced intervals along the length of the material. The carrier beams are movable both vertically and transversely to their length to lift the material from the fixed beams and displace it in a stepwise manner along its path through the furnace.

Between each pair of fixed and carrier beams is a group of the lower panels 160 sloped to form a continuous scale chute 166 so that scale falling from the hot product will be directed into one or more troughs 168 disposed below the chute. The trough(s) are inclined from the horizontal and are fitted with vibrator mechanisms 170 similarly to the vibratory drives that are referred to above for vibrating the roller mill table panels. The mechanisms 170 are operated intermittently to ensure that any accumulated scale is discharged into a collecting bin 172.

The facility with which the fallen scale can be collected, even in relatively small quantities, in this and the earlier described embodiments, is particularly suitable for the handling of high alloy products, where the scale will be of a known composition with a large alloy content, and therefore has a substantial scrap value.

**Claims**

1. A composite thermal insulation panel for a metal processing installation having a core of heat-insulating material (6) enclosed in an outer casing comprising a thin wall providing a membrane (8 or 116) adapted to be exposed to thermal radiation from adjacent high temperature material and to form a hot face of the panel with a temperature close to that of said material characterised in that said membrane has edges (36 or 43 or 100) retained between opposed elements (38 or 44, 48 or 44, 54 or 102) of the panel casing at the sides thereof, said elements being arranged at a spacing substantially larger than the thickness of the membrane, and the membrane edges being held so as to be able to move inwardly and outwardly substantially freely relative to said elements while remaining engaged therebetween.

2. A panel according to claim 1 wherein the heat-insulating core comprises ceramic fibre material (6) which, at least in the region immediately underlying said membrane, is precompressed to be urged resiliently into contact with the hot face.

3. A panel according to claim 1 or claim 2 wherein at said retained edges of the membrane, the membrane edges (36 or 100) and/or the retaining elements (38 or 44, 48 or 44, 45 or 102) at the sides of the panel casing have a U-section formation providing a channel-form engagement.

4. A panel according to claim 3 wherein said membrane edges (36) and their retaining elements (38) are both provided by U-form lips extending substantially parallel to the hot face membrane.

5. A panel according to claim 3 wherein said U-section formations (100, 102) extend transversely to the hot face and the interengaged surfaces are spaced from each other and transversely of the panel to permit relative thermal expansion transversely to their planar extent.

6. A panel according to claim 4 or claim 5 wherein retaining means (40) are provided to retain the interengaged U-section formations (36, 38 or 43, 44, 54) in interengagement while permitting sliding movements therebetween.

7. A panel according to claim 3 wherein the panel has side walls (46) with inwardly turned flanges (44, 50) forming a receiving channel for edges (43) of the hot face diaphragm to engage said diaphragm in place while permitting thermal expansion movements relative to the side walls.

8. A panel according to claim 7 having an oblong hot face and wherein said U-section formations (100, 102) are provided along the longer sides, while along the shorter sides the panel has walls with curved, inwardly directed edges (90) and the hot face membrane has correspondingly curved edge portions (92) that overlie said side face edges and are secured to them through means (96) spaced from the hot face.

9. A composite thermal insulation panel or a group of said panels disposed side by side for use in a metal processing installation, the or each said panel having a core of heat-insulating material (6) enclosed in an outer casing comprising a thin wall providing a membrane (116) adapted to be exposed to thermal radiation from adjacent high temperature material and to form a hot face of the panel with a temperature close to that of said material characterised in that said membrane (116) of the panel, or said membranes of the group of panels (160), comprise surfaces that are inclined downwardly to at least one aperture (118 or 166) within the overall planar extent of the panel or group of panels.

10. A panel or a group of panels according to claim 9 wherein means (168) are provided below said aperture or apertures for receiving particulate material falling therethrough.

11. A panel or a group of panels according to claim 9 or claim 10 provided with means for causing or permitting vibration of the panel or group of panels to assist the movement of particulate material on the hot face towards said aperture or apertures.

12. A panel or a group of panels according to any one of claims 9 to 11 wherein shielding means (154) are provided to reduce heat loss through the aperture or apertures.

13. A panel or group of panels according to any one of claims 9 to 12 wherein temperature sensing means (148) are provided at the side remote from the hot face membrane (116) to be exposed to thermal radiation passing through said aperture (118 or 166) from the side of the hot face.

14. A group of panels according to claim 13 comprising at least one upper panel and at least one lower panel arranged to be disposed above and below the high temperature material path respectively and having aligned apertures (116, 146) whereby temperature sensing means above the upper panel can respond to the temperature zone below the bottom panel when said path is clear.

15. A group of panels according to any one of claims 9 to 14 wherein the individual panels are arranged in the configuration of a chute or like gravity conveying device to direct particulate matter to a space between them.

16. A panel according to any one of claims 9 to 12 wherein a series of inclined surfaces (8') slope downwardly from the periphery of the hot face to an aperture (118) in a central region of the hot face.

17. A composite thermal insulation panel for a metal processing installation having a core of heat-insulating material (6) enclosed in an outer casing comprising a thin wall providing a membrane (8 or 116) adapted to be exposed to thermal radiation from adjacent high temperature material and to form a hot face of the panel with a temperature close to that of said material characterised in that said membrane comprises surfaces (8') that are inclined from at least two opposite edges to an inner region which is thereby at a different level from said edges.

18. A panel according to claim 17 wherein said membrane (8) has a generally pyramidal form.

19. A panel according to claim 17 or claim 18 wherein said membrane is provided with corrugations (14 or 24) extending parallel to the base or edges of said pyramidal form.

20. A panel according to any one of claims 17 to 19 wherein said membrane is arranged to extend generally horizontally with said surfaces (8') inclined downwardly towards an inner region of the panel.

21. A panel according to claim 20 wherein a through-opening (118) is provided in said inner region whereby with the hot face of the panel uppermost, loose material falling on said surfaces is guided to fall through said opening.

22. A panel according to any one of claims 17 to 21 wherein said membrane is secured to adjoining parts of the casing through side extensions (9) that project transversely away from the hot face.

23. A panel according to any one of claims 17 to 21 wherein said membrane of the hot face has its edges slidably interengaged with the edges of peripheral side walls of the panel, at least one of said edges of the membrane and of the side walls having a U-section formation (36, 38 or 44, 50 or 100, 102) providing an engaging channel for the adjoining region of the other of said edges.

24. A panel according to any one of claims 17 to 23 having side walls with curved, inwardly directed edges (90) and wherein said hot face membrane has correspondingly curved edge portions (92) that overlie said side wall edges and are secured to them through means (96) spaced from the hot face.

## Revendications

1. Un panneau composite d'isolation thermique pour une installation de traitement de métal, comprenant un noyau (6) en matériau thermiquement isolant enfermé dans une enveloppe externe comprenant une paroi mince formant une membrane (8, 116) adaptée pour être exposée au rayonnement thermique provenant d'un matériau voisin à haute température et pour former une face chaude de panneau ayant une température proche de celle dudit matériau, caractérisé en ce que ladite membrane comporte des bords (36, 43, 100) retenus entre des éléments opposés (38, 44, 48 ou 44, 54 ou 102) de l'enveloppe du panneau sur les côtés de celle-ci, lesdits éléments étant agencés avec un écartement notablement supérieur à l'épaisseur de la membrane, et les bords de la membrane étant maintenus de façon à pouvoir se déplacer vers l'intérieur et vers l'extérieur de façon à peu près libre par rapport auxdits éléments tout en restant engagés entre ceux-ci.

2. Un panneau suivant la revendication 1, dans lequel le noyau thermiquement isolant est constitué par un matériau de fibres céramiques (6), qui au moins dans la région située immédiatement au-dessous de ladite membrane, est pré-comprimé pour être forcé élastiquement en contact avec la face chaude.

3. Un panneau suivant la revendication 1 ou la revendication 2, dans lequel au niveau desdits bords retenus de la membrane, les bords (36, 100) de la membrane et/ou les éléments retenus (38 ou 44, 48 ou 44, 45 ou 102) sur les côtés de l'enveloppe du panneau ont une forme de section en U réalisant un engagement en prise par forme de gouttière.

4. Un panneau suivant la revendication 3 dans lequel lesdits bords (36) de la membrane et leurs éléments de retenue (38) sont tous deux pourvus de lèvres de forme en U qui s'étendent à peu près parallèlement à la membrane de la face chaude.

5. Un panneau suivant la revendication 3 dans lequel lesdites formations de section en U (100, 102) s'étendent transversalement à la face chaude et les surfaces en prise mutuelle sont espacées l'une de l'autre et transversalement au panneau pour permettre une dilatation thermique relative transversalement à leur surface plane.

6. Un panneau suivant la revendication 4 ou la revendication 5 dans lequel des moyens de retenue (40) sont prévus pour retenir les formations en U mutuellement engagées (36, 38 ou 43, 44, 54) en prise mutuelle tout en permettant des mouvements de glissement entre-elles.

7. Un panneau suivant la revendication 3 dans lequel le panneau comporte des parois latérales (46) avec des rebords (44, 50) tournés vers l'intérieur formant un canal de réception pour les bords 43 du diaphragme de la face chaude pour engager ledit diaphragme en place tout en permettant des mouvements de dilatation thermique par rapport aux parois latérales.

8. Un panneau suivant la revendication 7 ayant une face chaude oblongue et dans lequel lesdites formations de section en U (100, 102) sont prévues le long des côtés plus longs, tandis que le long des côtés plus courts le panneau comporte des parois avec des bords incurvés (90) dirigés vers l'intérieur et la membrane de la face chaude comporte des parties de bords (92) incurvées de façon correspondante qui recouvrent lesdits bords latéraux de la face et sont fixées sur eux par des moyens (96) espacés de la face chaude.

9. Un panneau composite d'isolation thermique ou un groupe desdits panneaux disposés côte à côte destiné à être utilisé dans une installation de traitement de métal, le panneau ou chacun desdits panneaux ayant un noyau (6) en un matériau thermiquement isolant enfermé dans une enveloppe externe comprenant une paroi mince formant une membrane (116) adaptée pour être exposée au rayonnement thermique d'un matériau voisin à haute température et pour former une face chaude du panneau avec une température proche de celle dudit matériau, caractérisé en ce que ladite membrane (116) du panneau ou lesdites membranes du groupe de panneaux (160) comprennent des surfaces qui sont inclinées vers le bas vers au moins une ouverture (118, 166) dans toute la surface plane du panneau ou du groupe de panneaux.

10. Un panneau ou un groupe de panneaux suivant la revendication 9, dans lequel des moyens (168) sont prévus au-dessous de ladite ouverture ou des ouvertures pour recevoir une matière particulaire tombant à travers celles-ci.

11. Un panneau ou un groupe de panneaux suivant la revendication 9 ou la revendication 10 comportant des moyens pour provoquer ou permettre la vibration du panneau ou du groupe de panneaux pour faciliter le déplacement de la matière particulaire sur la face chaude vers ladite ouverture ou lesdites ouvertures.

12. Un panneau ou un groupe de panneaux suivant l'une quelconque des revendications 9 à 11, dans lequel des moyens de protection (154) sont prévus pour réduire la perte de chaleur à travers l'ouverture ou lesdites ouvertures.

13. Un panneau ou un groupe de panneaux suivant l'une quelconque des revendications 9 à 12 dans lequel des moyens capteurs de température (148) sont prévus sur le côté opposé à la membrane (116) de face chaude pour être exposés au rayonnement thermique passant à travers ladite ouverture (118 ou 166) depuis le côté de la face chaude.

14. Un groupe de panneaux suivant la revendication 13 comprenant au moins un panneau supérieur et au moins un panneau inférieur agencés pour être disposés au-dessus et au-dessous respectivement du trajet du matériau à haute température et comportant des ouvertures alignées (116, 146) grâce à quoi des moyens capteurs de température disposés au-dessus du panneau supérieur peuvent répondre à la zône de température au-dessous du panneau inférieur lorsque ledit trajet est dégagé.

15. Un groupe de panneaux suivant l'une quelconque des revendications 9 à 14, dans lequel les panneaux individuels sont agencés suivant la configuration d'une trémie ou autre dispositif de transport par gravité pour diriger des matières particulaires vers un espace entre eux.

16. Un panneau suivant l'une quelconque des revendications 9 à 12 dans lequel une série de surfaces inclinées (8') sont inclinées vers le bas depuis la périphérie de la face chaude vers une ouverture (118) dans une région centrale de la face chaude.

17. Un panneau composite d'isolation thermique pour une installation de traitement de métal, comportant un noyau (6) en un matériau thermiquement isolant enfermé dans une enveloppe externe comprenant une paroi mince formant une membrane (8, 116) adaptée pour être exposée au rayonnement thermique provenant d'un matériau voisin à haute température et pour former une face chaude du panneau avec une température proche de celle dudit matériau, caractérisé en ce que ladite membrane comprend des surfaces (8') qui sont inclinées à partir d'au moins deux bords opposés vers une région interne qui est ainsi à un niveau différent par rapport auxdits bords.

18. Un panneau suivant la revendication 17 dans lequel la membrane (8) présente une forme générale pyramidale.

19. Un panneau suivant la revendication 17 ou la revendication 18 dans lequel ladite membrane comporte des ondulations (14, 24) qui s'étendent parallèlement à la base ou aux bords de ladite forme pyramidale.

20. Un panneau suivant l'une quelconque des revendications 17 à 19, dans lequel ladite membrane est agencée de façon à s'étendre dans son ensemble horizontalement avec lesdites surfaces (8') inclinées vers le bas vers une région interne du panneau.

21. Un panneau suivant la revendication 20 dans lequel une ouverture (118) traversante est prévue dans ladite région interne grâce à quoi, avec la face chaude du panneau le plus haut, une matière détachée tombant sur lesdites surfaces est guidée pour tomber à travers ladite ouverture.

22. Un panneau suivant l'une quelconque des revendications 17 à 21 dans lequel ladite membrane est fixée à des parties attenantes de l'enveloppe au moyen de prolongements latéraux (9) qui font saillie transversalement en s'écartant de ladite face chaude.

23. Un panneau suivant l'une quelconque des revendications 17 à 21 dans lequel ladite membrane de la face chaude a ses bords en prise mutuelle à glissement avec les bords des parois latérales périphériques du panneau, au moins l'un desdits bords de la membrane et desdites parois latérales ayant une formation (36, 38 ou 44, 50 ou 100, 102) de section en U formant un canal de prise pour la région adjacente de l'autre desdits bords.

24. Un panneau suivant l'une quelconque des revendications 17 à 23 ayant des parois latérales avec des bords incurvés (90) dirigés vers l'intérieur et dans lequel ladite membrane de la face chaude présente des parties de bords (92) incurvées de façon correspondante qui recouvrent lesdits bords de parois latérales et sont fixés sur ceux-ci par des moyens (96) espacés de la face chaude.

**Patentansprüche**

1. Zusammengesetzte Wärmeisolationstafel für eine Metallbearbeitungsanlage mit einem Kern aus einem wärmeisolierenden Material (6), das von einem äußeren Gehäuse umschlossen ist, bestehend aus einer dünnen Wand, die eine Membran (8 oder 116) bildet, die der Wärmestrahlung eines benachbarten Materials ausgesetzt ist, das eine hohe Temperatur aufweist, und eine heiße Seite der Tafel bildet, die eine Temperatur aufweist, die derjenigen des Materials nahekommt, dadurch gekennzeichnet, daß die Membran Ränder (36 oder 43 oder 100) hat, die zwischen einander gegenüberliegenden Elementen (38 oder 44, 48 oder 44, 54 oder 102) des Tafelgehäuses an dessen Seiten festgelegt sind, wobei die Elemente unter einem Abstand angeordnet sind, der im wesentlichen größer ist als die Dicke der Membran, und daß die Ränder der Membran so gehalten sind, daß sie sich relativ zu den Elementen im wesentlichen unbehindert nach innen und nach außen bewegen können, während sie zwischen diesen erfaßt bleiben.

2. Tafel nach Anspruch 1, wobei der wärmeisolierende Kern aus einem keramischen Fasermaterial (6) besteht, das zumindest in dem Bereich unmittelbar unter der Membran vorverdichtet ist, damit es an der heißen Seite nachgiebig anliegt.

3. Tafel nach Anspruch 1 oder 2, wobei die festgehaltenen Ränder der Membran, die Membranränder (36 oder 100) und/oder die Halteelemente (38 oder 44, 48 oder 44, 45 oder 102) an den Seiten des Tafelgehäuses einen U-förmigen Querschnitt haben, der einen rinnenförmigen Eingriff ergibt.

4. Tafel nach Anspruch 3, wobei sowohl die Membranränder (36) als auch ihre Halteelemente (38) mit U-förmigen Lippen versehen sind, die sich im wesentlichen parallel zur heißen Seite der Membran erstrecken.

5. Tafel nach Anspruch 3, wobei sich die Ausbildungen (100, 102) mit U-förmigem Querschnitt quer zu der heißen Seite erstrecken und wobei die miteinander in Eingriff stehenden Flächen im Abstand voneinander und quer zur Tafel angeordnet sind, um eine relative Wärmedehnung quer zu ihrer ebenen Erstreckung zu ermöglichen.

6. Tafel nach Anspruch 4 oder 5, wobei Haltemittel (40) vorgesehen sind, um die miteinander in Eingriff stehenden Ausbildungen mit U-förmigem Querschnitt (36, 38 oder 43, 44, 54) im Eingriff zu halten, aber Gleitbewegungen zwischen diesen zuzulassen.

7. Tafel nach Anspruch 3, wobei die Tafel Seitenwände (46) mit nach innen gekehrten Flanschen (44, 50) aufweist, die eine Aufnahmerinne für die Ränder (43) der auf der heissen Seite angeordneten Membran bilden, um die Membran festzulegen, aber Wärmeausdehnungsbewegungen gegenüber den Seitenwänden zuzulassen.

8. Tafel nach Anspruch 7, die eine längliche heiße Seite aufweist und wobei die Ausbildungen mit U-förmigem Querschnitt (100, 102) längs der langen Seiten angeordnet sind, während längs der kurzen Seiten der Tafel Wände mit gekrümmten, nach innen gerichteten Rändern (90) angeordnet sind, und wobei die auf der heißen Seite angeordnete Membran entsprechend gekrümmte Randbereiche (92) aufweist, welche die seitlichen Ränder überdecken und durch Mittel (96) an diesen befestigt sind, die im Abstand von der heißen Seite angeordnet sind.

9. Zusammengesetzte Wärmeisolationstafel oder eine Gruppe solcher Tafeln, die nebeneinander angeordnet sind, zur Verwendung in einer Metallbehandlungsanlage, wobei jede Tafel einen Kern aus einem wärmeisolierenden Material (6) aufweist, der in einem äußeren Gehäuse eingeschlossen ist, bestehend aus einer dünnen Wand, die eine Membran (116) bildet, die der Wärmestrahlung eines benachbarten Materials mit hoher Temperatur ausgesetzt ist und eine heiße Seite der Tafel bildet, deren Temperatur derjenigen des Materials nahekommt, dadurch gekennzeichnet, daß die Membran (116) der Tafel oder die Membranen der Gruppe von Tafeln (160) Oberflächen haben, die mindestens zu einer Öffnung (118 oder 166) hin nach unten geneigt sind, die im gesamten Grundriß der Tafel oder der Gruppe von Tafeln angeordnet ist.

10. Tafel oder Gruppe von Tafeln nach Anspruch 9, wobei unter der Öffnung oder den Öffnungen Mittel (168) angeordnet sind, um durch diese hindurchfallende Materialteilchen aufzunehmen.

11. Tafel oder Gruppe von Tafeln nach Anspruch 9 oder 10, die mit Mitteln zum Bewirken oder Ermöglichen von Schwingungen der Tafel oder der Gruppe von Tafeln versehen ist, um die Bewegung der Materialteilchen auf der heißen Seite zu der Öffnung oder zu den Öffnungen hin zu unterstützen.

12. Tafel oder Gruppe von Tafeln nach einem der Ansprüche 9 bis 11, wobei Abschirmmittel (154) vorgesehen sind, um den Wärmeverlust durch die Öffnung oder die Öffnungen zu verringern.

13. Tafel oder Gruppe von Tafeln nach einem der Ansprüche 9 bis 12, wobei Temperaturfühler (148) auf der von der heißen Seite der Membran (116) abliegenden Seite angeordnet sind, damit sie der Wärmestrahlung ausgesetzt sind, die von der heißen Seite durch die Öffnung (118 oder 166) hindurchgeht.

14. Gruppe von Tafel nach Anspruch 13, bestehend aus mindestens einer oberen Tafel und mindestens einer unteren Tafel, die über bzw. unter der Bahn des eine hohe Temperatur aufweisenden Materials angeordnet sind und miteinander fluchtende Öffnungen (116, 146) aufweisen, wodurch die Temperaturfühler über der oberen Tafel auf den Temperaturbereich unter der unteren Tafel ansprechen können, wenn die Bahn frei ist.

15. Gruppe von Tafeln nach einem der Ansprüche 9 bis 14, wobei die einzelnen Tafeln in Form einer Rutsche oder eines ähnlichen Schwerkraftförderers angeordnet sind, um feste Teilchen einem dazwischen befindlichen Spalt zuzuführen.

16. Tafel nach einem der Ansprüche 9 bis 12, wobei eine Serie geneigter Flächen (8') vom Umfang der heißen Fläche zu einer im zentralen Bereich der heißen Fläche angeordneten Öffnung (118) hin abfallen.

17. Zusammengesetzte Wärmeisolationstafel für eine Metallbehandlungsanlage mit einem Kern aus wärmeisolierendem Material (6), der von einem äußeren Gehäuse umschlossen ist, bestehend aus einer dünnen Wand, die eine Membran (8 oder 116) bildet, die der Wärmestrahlung eines benachbarten Materials ausgesetzt ist, das eine hohe Temperatur aufweist, und die heiße Seite der Tafel bildet, deren Temperatur derjenigen des Materials nahekommt, dadurch gekennzeichnet, daß die Membran Flächen (8') hat, die von mindestens zwei gegenüberliegenden Rändern zu einem inneren Bereich hin geneigt sind, der sich dadurch auf einem von den Rändern abweichenden Niveau befindet.

18. Tafel nach Anspruch 17, wobei die Membran (8) im allgemeinen pyramidenförmig ist.

19. Tafel nach Anspruch 17 oder 18, wobei die Membran mit Rippen (14 oder 24) versehen ist, die sich parallel zur Basis oder den Kanten der Pyramide erstrecken.

20. Tafel nach einem der Ansprüche 17 bis 19, wobei die Membran so angeordnet ist, daß sie sich im allgemeinen horizontal mit den Flächen (8') erstreckt, die zu einem inneren Bereich der Tafel hin nach unten geneigt sind.

21. Tafel nach Anspruch 20, wobei eine Durchgangsöffnung (118) in dem inneren Bereich angeordnet ist, wodurch bei oben befindlicher heißer Seite der Tafel das auf die Flächen fallende lose Material geführt wird, um durch die Öffnung zu fallen.

22. Tafel nach einem der Ansprüche 17 bis 21, wobei die Membran über seitliche Verlängerungen (9), die von der heißen Seite quer abstehen, an benachbarten Bereichen des Gehäuses befestigt ist.

23. Tafel nach einem der Ansprüche 17 bis 21, wobei die Ränder der Membran der heißen Seite mit den Rändern der umlaufenden Seitenwände der Tafel verschiebbar in Eingriff stehen, und wobei mindestens einer der Ränder der Membran und der Seitenwände eine Ausbildung mit U-förmigem Querschnitt (36, 38 oder 44, 50 oder 100, 102) aufweist, die eine Eingriffsrinne für den benachbarten Bereich des anderen Randes bildet.

24. Tafel nach einem der Ansprüche 17 bis 23, die Seitenwände mit gekrümmten, nach innen gerichteten Rändern (90) aufweist, wobei die auf der heißen Seite angeordnete Membran entsprechend gekrümmte Randbereiche (92) aufweist, welche die Ränder der Seitenwände übergreifen und durch Mittel (96) an diesen befestigt sind, die im Abstand von der heissen Seite angeordnet sind.

FIG.1

FIG.2a

FIG.2b

FIG.3

FIG.4a

FIG.4b

FIG.5

FIG.6a

FIG.6

FIG. 7

FIG. 8

FIG. 9

FIG. 10

FIG. 11

FIG.12

FIG.13

# 0 059 093

FIG.14

FIG.15

7